# EUROPEAN PATENT SPECIFICATION

(11) **EP 3 232 261 B1**
(45) Date of publication and mention of the grant of the patent: **24.02.2021**
(21) Application number: 14907958.4
(22) Date of filing: 09.12.2014
(51) Int. Cl.: G02F 1/13357, G02F 1/1335, G06F 1/16, H04N 5/64

(54) **YELLOW BACKLIGHT SYSTEM AND YELLOW BACKLIGHT METHOD**
SYSTEM FÜR GELBE RÜCKBELEUCHTUNG UND VERFAHREN FÜR GELBE RÜCKBELEUCHTUNG
SYSTÈME DE RÉTROÉCLAIRAGE JAUNE ET PROCÉDÉ DE RÉTROÉCLAIRAGE JAUNE

(43) Date of publication of application: 18.10.2017
(73) Proprietor: Lin, Po-Kang, Taipei City, Taiwan 104 (TW)
(72) Inventor: Lin, Po-Kang, Taipei City, Taiwan 104 (TW)
(74) Representative: Papula Oy
(86) International application number: PCT/CN2014/001111
(87) International publication number: WO 2016/090518

(56) References cited:
- CN-A- 102 044 195
- CN-A- 103 296 179
- CN-A- 103 904 188
- CN-A- 103 906 309
- CN-A- 104 051 588
- KR-A- 20110 035 114
- US-A1- 2007 164 975
- US-A1- 2008 297 537
- US-A1- 2008 297 591
- US-A1- 2010 097 408

## Description

### BACKGROUND OF THE INVENTION

### 1. Field of the Invention

The present invention relates to a yellow backlight system and a method thereof for a display device or surroundings so as to reduce the impact on human visual cells due to blue light produced by a display device.

### 2. The Prior Arts

Nowadays, due to the popularity of electronic products such as computers, smartphones and so on, a user may use these electronic products having a screen interface for a long time. When a user looks at the screen interface for a long time, it may damage the user's eyes.

Blue light normally exists in lighting equipment and computer monitors. The blue light can be seen normally and is high-energy visible light which is closest to ultraviolet light. The wavelength of the blue light may be between 400 nm∼500 nm. If eyes of a user are exposed to the blue light, macular degeneration may occur because of damage to retina.

In other words, if the human visual cells are exposed to the blue light for a long time, macular degeneration may result in a loss of vision in the center of the visual field due to damage to retina. It is a major cause of blindness because of macular degeneration.

Besides, the electronic products such as tablet PCs, computers, smartphones and so on may include high-resolution screen interface. The high-intensity blue light emitted by the high-resolution screen interface may damage the human visual cells.

At present, wearing a pair of glasses with blue-light blocking lenses may reduce the intensity of the blue light that enters the user's eyes. Generally, two kinds of blue-light blocking lenses may be used; one is dyed blue-light filtering lenses and another is coated blue-light blocker lenses.

In addition, the dyed blue-light filtering lenses are commonly used because the blue-light filtering lenses are better than the coated blue-light blocker lenses.

However, the above solutions must enable a user to replace her/his glasses with new blue-light filtering lenses. It is inconvenient for a user who has already worn a pair of glasses. Besides, it may result in misjudging the color of an object when a user wears a pair of blue-light filtering glasses for a long time, for example, misjudging the colors of traffic lights US2008297591, US2007164975, US2010097408, US2008297537 constitue prior art disclosing a light source system arranged in the periphery of a display.

### SUMMARY OF THE INVENTION

In light of the foregoing drawbacks, an objective of the present invention is to provide a yellow backlight system and a method thereof, thereby reducing damage to the human visual cells of human body due to blue light produced by a display device.

For achieving the foregoing objective, the present invention provides a yellow backlight system according to claim 1.

For achieving the foregoing objective, the present invention further provides a method of operating a yellow backlight system according to claim 2.

In comparison with the related art, the present invention may reduce intensity of blue light without wearing a pair of blue-light blocking glasses, so as to decrease the impact on the human visual cells. With regard to users who already wear a pair of glasses, there is no need to be replaced with new blue-light blocking lenses such that extra cost may be increased. Further, the present invention may enable users not to misjudge colors while wearing a pair of blue-light blocking glasses for a long time.

### BRIEF DESCRIPTION OF THE DRAWINGS

The present invention will be apparent to those skilled in the art by reading the following detailed description of a preferred exemplary embodiment thereof, with reference to the attached drawings, in which:
Fig. 1 is a flow chart illustrating a method for a yellow backlight ;
Fig. 2 is a schematic diagram illustrating a system for a yellow backlight at the side of a display device ;
Fig. 3 is a schematic diagram illustrating the system for a yellow backlight at the back of a display device ;
Fig. 4 is a schematic diagram illustrating the system for a yellow backlight at the back of a display device according to another preferred exemplary embodiment of the present invention; and
Fig. 5 is a schematic diagram illustrating the system for a yellow backlight at the front of a display device . Only figure 4 illustrates an embodiment of the invention.

### DETAILED DESCRIPTION OF THE PREFERRED EMBODIMENT

The accompanying drawings are included to provide a further understanding of the invention, and are incorporated in and constitute a part of this specification. The drawings illustrate preferred exemplary embodiments of the invention and, together with the description, serve to explain the principles of the invention.

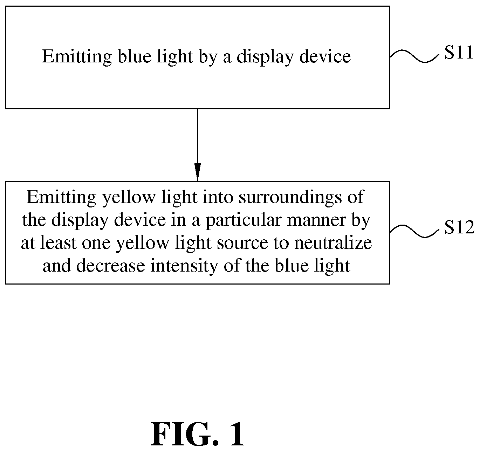

Fig. 1 is a flow chart illustrating a method for a yellow backlight .

As shown in Fig. 1, in step S11, blue light may be emitted by a display device. The display device may be a device having a screen such as a notebook, a tablet PC, a PC, a smartphone, a television, etc. The blue light may be visible light whose wavelength is between 400 nm and 500 nm.

In step S12, yellow light may be emitted by at least one yellow light source into surroundings of the display device in a particular manner to neutralize and reduce intensity of the blue light. The particular manner may be reflection, refraction, a combination thereof or direct illumination. The yellow light may be visible light whose wavelength is between 570nm and 590nm. The yellow light source may be a kind of light source that emits yellow light, such as an incandescent lamp, a fluorescent lamp, a LED, a cold cathode tube, a gas discharge lamp, etc. The yellow light may be emitted in the particular manner to neutralize the blue light emitted by the display device and to decrease the intensity of the blue light, so as to protect the human visual cells from the illumination of intensive blue light.

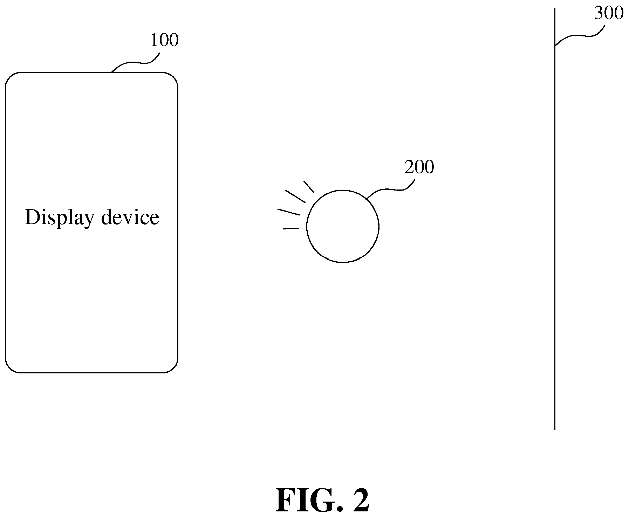

Fig. 2 is a schematic diagram illustrating a system for a yellow backlight at the side of a display device .

As shown in Fig. 2, the display device 100 may emit blue light, but the yellow light source 200 may emits yellow light so as to neutralize the blue light emitted by the display device 100. Accordingly, the yellow light source 200 may be installed in between a backside of the display device 100 and a wall 300. The yellow light source 200 may emit the yellow light to the wall 300, and then the yellow light may be reflected by the wall 300 towards the surroundings of the display device 100 in order to neutralize and reduce intensity of the blue light that is emitted by the display device 100. Therefore, the intensity of the blue light that seen by human eyes may be reduced such that the damage of the human visual cells may be effectively reduced. The display device 100 may be a device having a screen such as a notebook, a tablet PC, a PC, a smartphone, a television, etc. Further, the yellow light source 200 may be a kind of light source that may emit yellow light, such as an incandescent lamp, a fluorescent lamp, a LED, a cold cathode tube, a gas discharge lamp, etc.

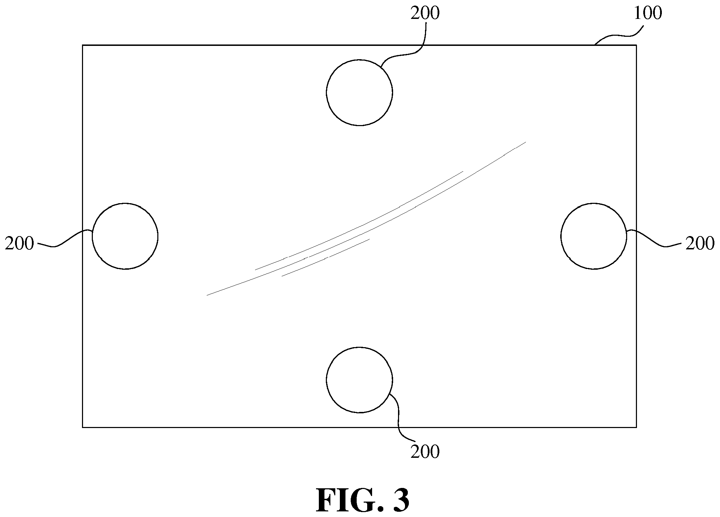

Fig. 3 is a schematic diagram illustrating the system for a yellow backlight at the back of a display device .

As shown in Fig. 3, a plurality of yellow light sources 200 may be installed at the backside of the display device 100. Four yellow light sources 200 may be installed at the backside of the display device 100. Four yellow light sources 200 may emit yellow light from the backside of the display device 100 to bring about a technical effect of soft yellow light around the display device 100. The yellow light emitted by the yellow light sources 200 may be reflected towards the surroundings and the front of the display device 100 such that the blue light generated by the display device 100 may be neutralized and reduced . Therefore, the intensity of the blue light that enters in the human eyes may be reduced so as to decrease the damage of the human visual cells.

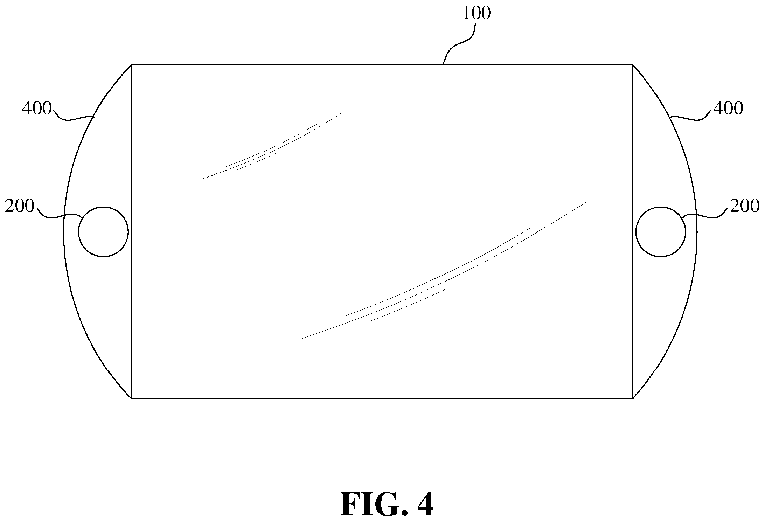

Fig. 4 is a schematic diagram illustrating the system for a yellow backlight at the back of a display device according to another preferred exemplary embodiment of the present invention.

As shown in Fig. 4, two transparent boards 400 may be installed at the two sides of the display device 100 in accordance with an embodiment of the present invention, and the yellow light sources 200 is installed at the backside of the transparent boards 400. . In accordance with the embodiment of the present invention, two transparent boards 400 may be installed, but according to the invention at least one is installed. Accordingly, the yellow light emitted by the yellow light sources 200 is refracted towards the surroundings and the front of the display device 100 through the transparent boards 400, so as to neutralize and reduce intensity of the blue light generated by the display device 100. Therefore, the intensity of the blue light that enters in the human eyes may be reduced such that the damage to the human visual cells may be effectively reduced. In one embodiment of the present invention, the transparent board 400 may be substances such as transparent resins, ground glasses, etc.

In one embodiment of the present invention, the yellow light emitted by the yellow light source 200 comprises a wavelength between 570 and 590 nm and is refracted by the transparent boards 400 and may be reflected by the wall (not shown) close to the display device 100 towards the surroundings and the front of the display device 100 such that intensity of the blue light generated by the display device 100 may be effectively neutralized and reduced. Therefore, the intensity of the blue light that enters in the human eyes may be reduced, and the damage of the human visual cells may be effectively decreased.

In one embodiment of the present invention, the transparent board 400 may be a white transparent board. After the yellow light emitted by the yellow light source 200 is refracted by the white transparent board, the refracted light may remain yellow light. Therefore, the refracted yellow light may bring about the technical effect of neutralizing and reducing the intensity of the blue light.

Not according to the present invention, the transparent board 400 may be a yellow transparent board, and the yellow light source 200 may be replaced by a white light source. After the white light emitted by the white light source is refracted by the yellow transparent board, the refracted light may remain yellow light. Therefore, the refracted yellow light may also bring about the effect of neutralizing and reducing the intensity of the blue light. Hence, the intensity of the blue light that enters the human eyes may be reduced such that the damage to the human visual cells may be decreased.

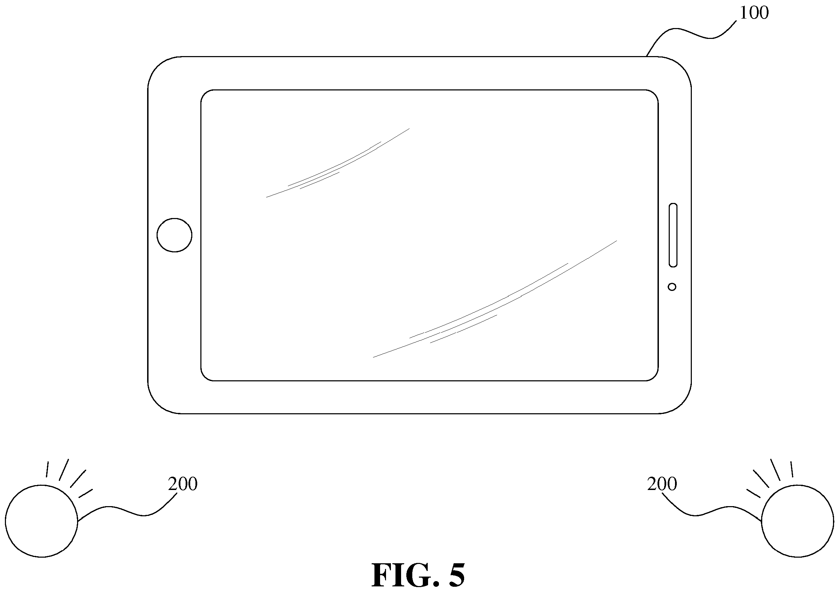

Fig. 5 is a schematic diagram illustrating the system for a yellow backlight at the front of a display device .

As shown in Fig. 5, two yellow light sources 200 may installed in front of the display device 100. The display device 100 may emit blue light, but the yellow light sources 200 may emit yellow light to neutralize the blue light emitted by the display device 100. The yellow light sources 200 may emit the yellow light into the frond of the display device 100 and the wall (not shown) close to the display device 100, and the yellow light may be reflected by both the display device 100 and the wall. The reflected soft yellow light may neutralize and reduce the blue light generated by the display device 100. Therefore, the intensity of the blue light that enters the human eyes may be reduced, and the damage of the human visual cells may be decreased.

In comparison with the related art, the present invention may reduce the intensity of blue light without wearing a pair of blue-light blocking glasses, so as to decrease the damage of human visual cells. For users who already wear a pair of glasses, there is no need to be replaced with new blue-light blocking lenses such that extra cost may be reduced. Further, the present invention may enable users not to misjudge colors while wearing a pair of blue-light blocking glasses for a long time. Besides, in accordance with the present invention, since extra yellow light sources are placed at the backside of a display device or at the surroundings of a display device, the brightness of surroundings of a display device may be improved significantly. Moreover, users' eyes may be less prone to fatigue when users look at a display device for a long time.

The above preferred exemplary embodiment describes the principle and effect of the present invention, but is not limited to the present invention. It will be apparent to a person ordinarily skilled in the art that various modifications and variations can be made to the disclosed embodiments. It is intended that the specification and examples be considered as exemplary embodiment only, with a scope of the invention being indicated by the following claims

Although the present invention has been described with reference to the preferred exemplary embodiments thereof, it is apparent to those skilled in the art that a variety of modifications and changes may be made without departing from the scope of the present invention which is defined by the appended claims.

## Claims

1. A yellow backlight system comprising a display device (100) configured to emit blue light;
at least one yellow light source (200) configured to emit yellow light into surroundings of the display device (100) by refraction, reflection or a combination of reflection and refraction and in order to reduce the intensity of blue light perceived by human eyes, wherein a wavelength of the yellow light is between 570 nm and 590 nm; and
at least one transparent board (400) which is installed on the display device (100), and the at least one yellow light source (200) being installed on the at least one transparent board (400).

2. A method of operating a yellow backlight system comprising:
emitting blue light by a display device (100);
emitting yellow light into surroundings of the display device (100) by at least one yellow light source by refraction, reflection or a combination of refraction and reflection from the at least one yellow light source (200), in order to reduce the intensity of blue light perceived by human eyes, wherein a wavelength of the yellow light is between 570 nm and 590 nm;
wherein at least one transparent board (400) is installed on the display device (100), and the at least one yellow light source is installed on the at least one transparent board (400).

## Patentansprüche

1. Gelbes Hintergrundbeleuchtungssystem, umfassend:
eine Anzeigeeinrichtung (100), die ausgestaltet ist, um blaues Licht auszusenden;
mindestens eine gelbe Lichtquelle (200), die ausgestaltet ist, um gelbes Licht in das Umfeld der Anzeigeeinrichtung (100) durch Lichtbrechung, Reflexion oder eine Kombination von Reflexion und Lichtbrechung auszusenden, und um die Intensität von blauem Licht zu reduzieren, das durch menschliche Augen wahrgenommen wird,
wobei eine Wellenlänge des gelben Lichts zwischen 570 nm und 590 nm liegt; und
mindestens eine transparente Platte (400), die auf der Anzeigeeinrichtung (100) installiert ist, und die mindestens eine gelbe Lichtquelle (200) auf mindestens der einen transparenten Platte (400) eingebaut ist.

2. Verfahren zum Betreiben eines gelben Hintergrundbeleuchtungssystems, umfassend:
Aussenden von blauem Licht durch eine Anzeigeeinrichtung (100);
Aussenden von gelbem Licht in das Umfeld der Anzeigeeinrichtung (100) von mindestens einer gelben Lichtquelle durch Lichtbrechung, Reflexion oder eine Kombination von Lichtbrechung und Reflexion von der mindestens einen gelben Lichtquelle (200), um die Intensität von blauem Licht zu reduzieren, das durch menschliche Augen wahrgenommen wird,
wobei eine Wellenlänge des gelben Lichts zwischen 570 nm und 590 nm liegt;
wobei mindestens eine transparente Platte (400) auf der Anzeigeeinrichtung (100) installiert ist, und die mindestens eine gelbe Lichtquelle auf der mindestens einen transparenten Platte (400) eingebaut ist.

## Revendications

1. Système de rétroéclairage jaune comprenant
un dispositif d'affichage (100) configuré pour émettre de la lumière bleue;
au moins une source de lumière jaune (200) configurée pour émettre de la lumière jaune dans l'environnement du dispositif d'affichage (100) par réfraction, par réflexion ou par une combinaison de réflexion et de réfraction et de manière à réduire l'intensité de la lumière bleue perçue par les yeux humains,
dans lequel une longueur d'onde de la lumière jaune est comprise entre 570 nm et 590 nm; et
au moins un panneau transparent (400) qui est installé sur le dispositif d'affichage (100), et l'au moins une source de lumière jaune (200) étant installée sur l'au moins un panneau transparent (400).

2. Procédé permettant de faire fonctionner un système de rétroéclairage jaune comprenant le fait de:
émettre de la lumière bleue par un dispositif d'affichage (100);
émettre de la lumière jaune dans l'environnement du dispositif d'affichage (100) par au moins une source de lumière jaune par réfraction, par réflexion ou par une combinaison de réfraction et de réflexion à partir de l'au moins une source de lumière jaune (200), de manière à réduire l'intensité de la lumière bleue perçue par les yeux humains,
dans lequel une longueur d'onde de la lumière jaune est comprise entre 570 nm et 590 nm;
dans lequel au moins un panneau transparent (400) est installé sur le dispositif d'affichage (100), et l'au moins une source de lumière jaune est installée sur l'au moins un panneau transparent (400).
